# EUROPÄISCHE PATENTSCHRIFT

(11) **EP 1 624 197 B1**
(45) Veröffentlichungstag und Bekanntmachung des Hinweises auf die Patenterteilung: **21.05.2014**
(21) Anmeldenummer: 05016441.7
(22) Anmeldetag: 28.07.2005
(51) Int. Cl.: F15B 11/08, E02F 9/22

(54) **Hydrauliksystem mit Bypass im Rücklauf**
Hydraulicsystem with return bypass
Système hydraulique avec dérivation de retour

(30) Priorität: 02.08.2004 DE 102004037460
(43) Veröffentlichungstag der Anmeldung: 08.02.2006
(73) Patentinhaber: Liebherr-Hydraulikbagger GmbH, 88457 Kirchdorf/Iller (DE)
(72) Erfinder: Zitterbart, Thomas, 89165 Dietenheim (DE)
(74) Vertreter: Herrmann, Uwe

(56) Entgegenhaltungen:
- JP-A- 9 060 607
- US-A- 4 112 822
- US-A- 4 168 865
- US-A- 5 214 997
- US-A- 6 095 187

## Beschreibung

Die vorliegende Erfindung betrifft ein Hydrauliksystem mit einer Hydraulikversorgung, einem Verbraucher sowie mit einem zwischen Hydraulikversorgung und Verbraucher angeordneten Steuerventil, das mittels einer ersten Leitung sowie einer zweiten Leitung mit dem Verbraucher in Verbindung steht, wobei das Steuerventil in unterschiedliche Positionen schaltbar ist und in wenigstens einer Position die Hydraulikversorgung mit der ersten Leitung verbindet.

Derartige Hydrauliksysteme sind in unterschiedlichen Ausführungsformen bekannt. Als Hydraulikversorgung dient im allgemeinen eine Pumpe, deren Druckseite mittels eines Steuerventils mit dem Verbraucher verbindbar ist. Das Steuerventil kann beispielsweise als Längs- oder Drehschieberventil ausgeführt sein. Bei vorbekannten Hydrauliksystemen führt eine erste und eine zweite Leitung von dem Steuerventil zu dem Verbraucher bzw. zurück von dem Verbraucher zu dem Steuerventil. Dabei ist üblicherweise vorgesehen, dass alternativ die erste oder die zweite Leitung mit der Druckseite der Hydraulikversorgung verbunden wird und dass die jeweils nicht als Druckleitung dienende Leitung als Rücklaufleitung dient.

Aus der US 6,095,187 ist bereits ein magnetisch betätigtes Vier-Wege-HydraulikVentil bekannt. Das Ventil weist einen Hydraulikzulauf sowie zwei Anschlüsse für Hydraulikverbraucher auf, wobei die beiden Hydraulikverbraucher über getrennte Zuleitungen, die jeweils mit einem Magnetventil versehen sind, versorgt werden können. Über Sicherheits-Rückschlagventile (POCVs) wird sichergestellt, dass die mit Druck beaufschlagte Zuleitung nicht mit der Ablaufleitung konnektiert ist.

Unabhängig von ihrer konkreten Ausgestaltung haftet vorbekannten Hydrauliksystemen der Nachteil an, dass sich bei der Durchströmung des Steuerventils erhebliche Druckverluste im Hydraulikmedium ergeben, was in entsprechenden Leistungseinbußen resultiert.

Es ist daher die Aufgabe der vorliegenden Erfindung, ein Hydrauliksystem der eingangs genannten Art dahingehend weiterzubilden, dass die Druckverluste des das Hydrauliksystem durchströmenden Hydraulikmediums verringert werden.

Diese Aufgabe wird durch ein Hydrauliksystem mit den Merkmalen des Patentanspruchs 1 gelöst. Danach ist dass ein erstes Ventil vorgesehen, das mit der ersten und der zweiten Leitung in Verbindung steht. Weiterhin ist eine dritte als weiterer Rücklauf dienende Leitung vorgesehen, die mit dem ersten Ventil in Verbindung steht und die nicht in dem Steuerventil mündet, wobei das erste Ventil derart verschaltet ist, dass es bei Druckbeaufschlagung der ersten Leitung eine Verbindung zwischen zweiter Leitung und dritter Leitung freigibt. Durch diese Anordnung wird erreicht, dass nicht der gesamte Rücklauf mit den damit verbundenen Druckverlusten über das Steuerventil geführt wird. Durch die Freigabe der Verbindung zwischen der zweiten, in diesem Fall als Rücklauf dienenden Leitung und der ebenfalls als Rücklauf dienenden dritten Leitung, die nicht über das Steuerventil verläuft, sondern das Hydraulikmedium unmittelbar in den Tank leitet, wird erreicht, dass dieser Teil des Hydraulikmediums nur geringe Druckverluste erfährt. Die dadurch gewonnenen zusätzlichen Leistungsreserven stehen am Verbraucher zur Verfügung und können beispielsweise für den Betrieb des Werkzeuges eines Baggers genutzt werden.

Erfindungsgemäß ist ferner ein zweites Ventil vorgesehen das ebenfalls mit der dritten Leitung in Verbindung steht, das ferner mit der ersten und der zweiten Leitung in Verbindung steht und das derart verschaltet ist, dass das zweite Ventil bei Druckbeaufschlagung der zweiten Leitung eine Verbindung zwischen erster Leitung und dritter Leitung freigibt. In diesem Fall dient die zweite Leitung als Zulaufleitung und die erste und dritte Leitung als Rücklaufleitung.

Eine besonders kompakte Anordnung ergibt sich, wenn das erste und das zweite Ventil in einem gemeinsamen Ventilblock angeordnet sind.

Das erste und/oder das zweite Ventil sind vorteilhaft als federbelastete(s) Sitzventil(e) oder als Schieberventil bzw. Schieberventile, die vorzugsweise ebenfalls federbelastet sind, ausgeführt. Auch andere Varianten sind denkbar. Bei dem Steuerventil handelt es sich vorzugsweise um ein Schieberventil. Grundsätzlich sind auch bei dem Steuerventil beliebige Varianten denkbar.

Besonders vorteilhaft ist es, wenn das erste und/oder das zweite Ventil gemäß einem der Ansprüche 7 bis 12 ausgeführt ist.

Bei dem Verbraucher des Hydrauliksystems kann es sich beispielsweise um eine mit dem Werkzeug einer Arbeitsmaschine, beispielsweise eines Baggers in Verbindung stehende Kolben-Zylinder-Einheit oder eine beliebige sonstige Antriebseinheit handeln. Als Werkzeug kommt beispielsweise eine Schere oder ein Hammer, oder ein Stiel mit Löffelzylinder, ein Stiel mit Doppelzange und dergleichen in Betracht.

Die vorliegende Erfindung betrifft ferner ein Hydrauliksystem, wobei das erste und/oder zweite Ventil mit einem ersten, zweiten und mit einem dritten Anschluss sowie mit einem ersten Ventilkörper versehen ist, der in unterschiedliche Positionen bewegbar ist und in einer Schließstellung eine Verbindung zwischen dem zweiten und dritten Anschluss absperrt und in einer Offenstellung eine Verbindung zwischen dem zweiten und dritten Anschluss freigibt, wobei der Ventilkörper mit dem ersten Anschluss in Verbindung steht und derart angeordnet ist, dass der Ventilkörper bei Druckbeaufschlagung des ersten Anschlusses in die Offenstellung bewegt wird. Der dritte Anschluss dient zur zusätzlichen Ableitung des Hydraulikmediums beispielsweise in einen Tank, ohne dass das auf diese Weise zurückgeführte Hydraulikmedium das Steuerventil eines Hydraulikkreislaufes passiert. Auf diese Weise lassen sich Druckverluste im Rücklauf wirksam verringern.

Das Ventil kann auch als zweiseitig wirkendes Ventil ausgeführt sein. Dementsprechend kann vorgesehen sein, dass ein zweiter Ventilkörper vorgesehen ist, der in unterschiedliche Positionen bewegbar ist und in einer Schließstellung eine Verbindung zwischen dem ersten und dritten Anschluss absperrt und in einer Offenstellung eine Verbindung zwischen dem ersten und dritten Anschluss freigibt, wobei der Ventilkörper mit dem zweiten Anschluss in Verbindung steht und derart angeordnet ist, dass der Ventilkörper bei Druckbeaufschlagung des zweiten Anschlusses in die Offenstellung bewegt wird. Über das erfindungsgemäße Ventil wird der Rücklauf mit dem dritten Anschluss und somit mit einer Leitung verbunden, die nicht über das Steuerventil führt.

Wie oben ausgeführt ist das Ventil vorzugsweise als Sitzventil oder Schieberventil ausgeführt. Dabei kann vorgesehen sein, dass der erste und/oder der zweite Ventilkörper ein längsverschieblich in einem Ventilblock des Ventils aufgenommener federbelasteter Stößel oder Schieber ist. Das erste und zweite Ventil können durch einen gemeinsamen Schieber realisiert werden. Der Stößel kann in seinem einen Endbereich über einen konisch zulaufenden Ventilteller verfügen, der in der Schließstellung an einem Ventilsitz des Ventilblockes anliegt. Weiterhin kann vorgesehen sein, dass der Stößel in einem Endbereich einen Teller aufweist und dass eine Druckfeder vorgesehen ist, die sich zwischen dem Teller und dem Ventilblock abstützt. Die Feder ist derart ausgeführt, dass der Ventilkörper in seine Schließstellung bewegt wird, wenn kein Druck anliegt.

Die Anschlüsse des Ventils können als Bohrungen im Ventilblock ausgeführt sein, deren Längsachsen zueinander parallel verlaufen.

Weiterhin kann vorgesehen sein, dass die Stößel in zueinander parallel verlaufenden Richtungen bewegbar sind.

Die Erfindung betrifft schließlich ein Arbeitsgerät, insbesondere einen Bagger mit einem Hydrauliksystem nach einem der Ansprüche 1 bis 6 und/oder mit einem Ventil nach einem der Ansprüche 7 bis 12. Bei dem Verbraucher des Hydrauliksystems kann es sich um eine Kolben-Zylinder-Einheit oder sonstige Antriebseinheit einer Schere, eines Hammers, eines Löffels, einer Zange oder Doppelzange und dergleichen handeln. Die Anwendungsmöglichkeiten des erfindungsgemäßen Hydrauliksystems und Ventils sind jedoch nicht auf diese Beispiele beschränkt. Als sonstige Antriebseinheit kommt beispielsweise ein Drehantrieb in Betracht.

Besonders vorteilhaft ist es, wenn das Ventil am Verbraucher bzw. am Werkzeug eines Baggers oder dessen unmittelbarer Nähe angeordnet ist. Das über die dritte Leitung zurückgeführte Hydraulikmedium muss in bevorzugter Ausgestaltung der Erfindung keine Hindernisse oder weiteren Ventile um- bzw. durchströmen, sondern kann direkt abgeleitet werden, so dass sich im Rücklauf ein minimaler Druckverlust ergibt.

Weitere Einzelheiten und Vorteile der Erfindung werden anhand eines in der Zeichnung dargestellten Ausführungsbeispiels näher erläutert. Es zeigen:
Fig. 1a, 1b, 1c: eine schematische Darstellung eines Baggers mit einem herkömmlichen Hydrauliksystem sowie eine schematische Darstellung eines derartigen Hydrauliksystems;
Fig. 2: eine schematische Darstellung eines Hydrauliksystems gemäß der Erfindung;
Fig. 3: eine weitere Darstellung des Ventils eines Hydrauliksystems gemäß der Erfindung;
Fig. 4: perspektivische Ansichten des Ventils eines Hydrauliksystems gemäß der Erfindung in unterschiedlichen Schaltzuständen;
Fig. 5: eine Schnittdarstellung des Ventils des Hydrauliksystems gemäß der Erfindung;
Fig. 6: eine perspektivische Ansicht des erfindungsgemäßen Ventilblocks;
Fig. 7a, 7b eine schematische Darstellung eines Baggers mit dem Hydrauliksystem gemäß der Erfindung und
Fig. 8: eine Darstellung des Ventils als Schieberventil in unterschiedlichen Stellungen.

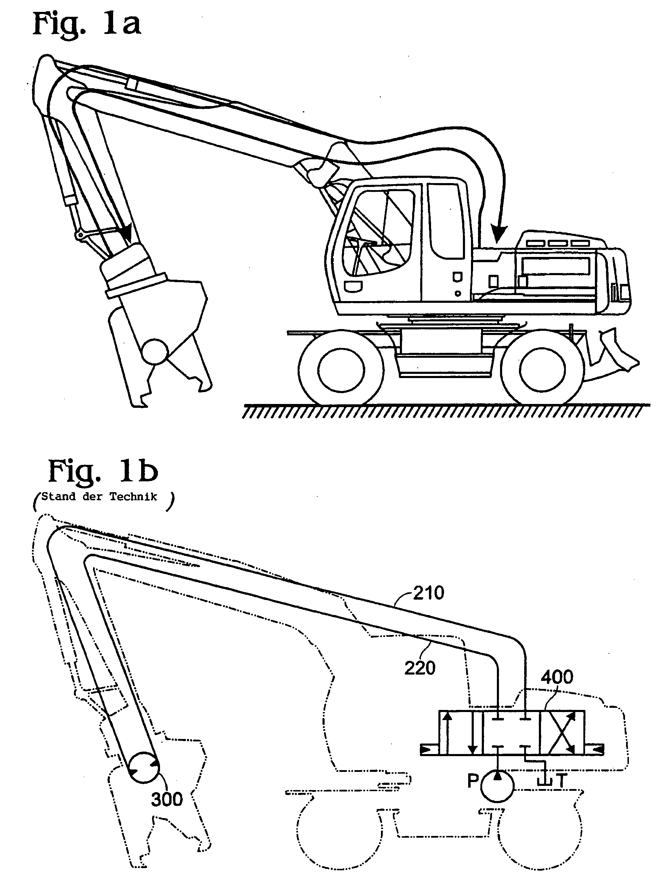

Fig. 1a, 1b zeigt in einer schematischen Seitenansicht einen Bagger mit einem Hydrauliksystem gemäß dem Stand der Technik. Von einer Hydraulikversorgung (Pumpe) P läuft das Hydraulikmedium über ein als z. B. Schieberventil ausgeführtes Steuerventil zum Werkzeug 300 bzw. zu einer mit diesem in Verbindung stehenden Kolben-Zylinder-Einheit oder sonstigen Antriebseinheit. Der Zulauf ist in Fig. 1a durch die Leitung symbolisiert, die an ihrem Ende einen auf das Werkzeug weisenden Pfeil aufweist. Die andere Leitung stellt den Rücklauf dar, mittels dessen das Hydraulikmedium über das Steuerventil zurück zum Tank T geführt wird, mit dem die Pumpe P saugseitig in Verbindung steht. Sowohl der zugeführte als auch der abgeführte Strom des Hydraulikmediums läuft über das Steuerventil 400, d.h. über die Schiebersteuerung. Insbesondere bei der Verwendung einer Schere als Werkzeug ergibt sich das Problem, dass ein größerer Volumenstrom zurückgeführt wird als zugeführt wird. Da der gesamte Ölvolumenstrom über das Schieberventil zurückläuft, sind hohe Druckverluste bedingt.

Fig. 1b zeigt das Steuerventil 400 mit Verbraucher 300. Zwischen Steuerventil 400 und dem Verbraucher 300 erstrecken sich die Leitungen 210, 220, die je nach Stellung des Steuerventils 400 mit der Pumpe P oder mit dem Tank T in Verbindung stehen.

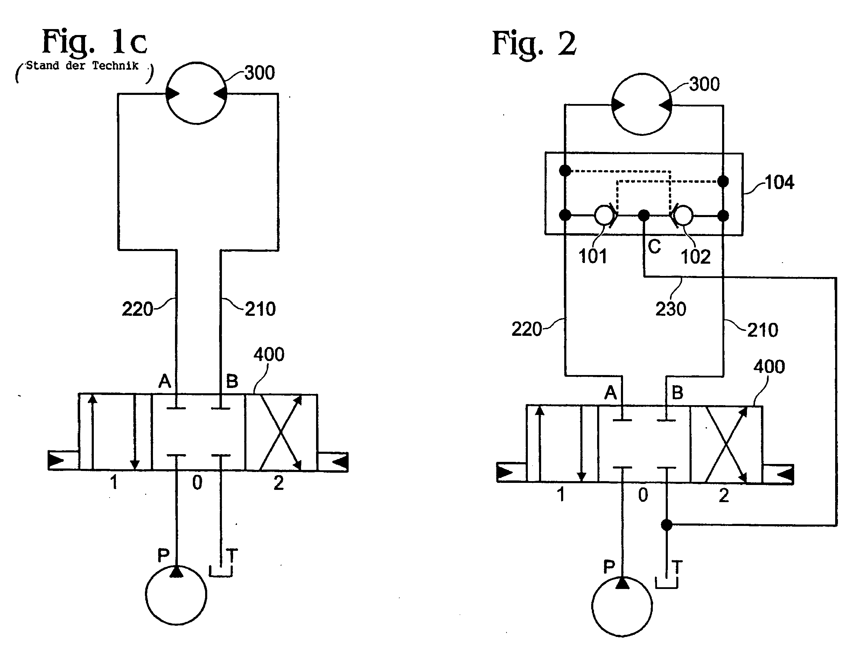

Figur 1c zeigt in schematischer Ansicht das Steuerventil 400 mit Verbraucher 300. Das Steuerventil 400 ist in einer Stellung dargestellt, in der keine der Leitungen 210, 220 mit der Pumpe P oder dem Tank T in Verbindung stehen. Je nach Stellung des Steuerventils 400 wird mit dem Anschluss A bzw. mit der Leitung 220 die Hydraulikversorgung (Pumpe P) verbunden oder eine Verbindung zum Tank T hergestellt. Entsprechendes gilt für Anschluss B und die Leitung 210. In beiden Fällen wird der gesamte Ölvolumenstrom über das Steuerventil 400 in den Tank zurückgeführt, wodurch sich hohe Druckverluste ergeben.

Fig. 2 zeigt eine schematische Darstellung eines Hydrauliksystems gemäß der Erfindung. Mit dem Bezugszeichen 300 ist ein Verbraucher gekennzeichnet, der beispielsweise durch die Kolben-Zylinder-Einheit einer Schere eines Baggers gebildet wird. Auch andere Anwendungen sind denkbar. Ferner ist ein als Schieberventil (Längs- oder Drehschieber) 400 ausgeführtes Steuerventil vorgesehen, das in dem vorliegenden Ausführungsbeispiel als 4/3-Wege Ventil ausgeführt ist. Von dem Steuerventil 400 führen zwei Leitungen 210 und 220 zu bzw. von dem Verbraucher 300. Je nach Stellung des Steuerventils 400 ist die Leitung 210 mit der Hydraulikversorgung (P) und die Leitung 220 mit dem Tank (T) oder die Leitung 210 mit dem Tank (T) und die Leitung 220 mit der Hydraulikversorgung (P) verbunden. Dementsprechend dient alternativ die Leitung 210 oder 220 als Zuführleitung und die jeweils andere Leitung als Rücklaufleitung. In einer dritten, in Figur 2 dargestellten Schaltstellung ist keine der Leitungen 210, 220 mit der Hydraulikversorgung verbunden.

Ist die Leitung 210 mit der Hydraulikversorgung verbunden, liegt der Druck nicht nur an dem Verbraucher 300 an, sondern auch an dem Ventil 101, wie dies durch die gestrichelte Linie angedeutet ist, die von der Leitung 210 zu dem Ventil 101 verläuft. Durch die Druckbeaufschlagung des Ventils 101 wird dieses geöffnet und eine Verbindung zwischen der Rücklaufleitung 220 und der Leitung 230 freigegeben. Über das Ventil 101 und die Leitung 230 läuft ein Teil des Hydraulikmediums direkt in den Tank und durchströmt dementsprechend nicht das Steuerventil 400. Der verbleibende Teil des rückströmenden Hydraulikmediums läuft durch die Leitung 220 in das Steuerventil 400 und durch dieses in den Tank. Aufgrund der Tatsache, dass ein Teil des rückströmenden Hydraulikmediums nicht über das Steuerventil 400, sondern unmittelbar durch die Leitung 230 in den Tank geführt wird, ergibt sich ein verringerter Druckverlust, was dazu führt, dass eine größere Leistung für den Verbraucher 300 zur Verfügung steht.

Eine entsprechende Wirkung ergibt sich, wenn nach Änderung der Schaltstellung des Steuerventils 400 ein Anschluss der Leitung 220 an die Hydraulikversorgung P erfolgt. In diesem Fall wird durch Druckbeaufschlagung das Ventil 102 geöffnet und über das geöffnete Ventil 102 eine Verbindung zwischen der in diesem Fall als Rücklaufleitung dienenden Leitung 210 und der Ablaufleitung 230 hergestellt, so dass das Hydraulikmedium über die Leitungen 210 und 230 abläuft. Die Druckbeaufschlagung des Ventils 102 durch die Leitung 220 ist durch die gestrichelte Linie von der Leitung 220 zu dem Ventil 102 gekennzeichnet.

Wie aus Fig. 2 ersichtlich, sind die Ventile 101 und 102 zwischen Steuerventil und Verbraucher 300 angeordnet.

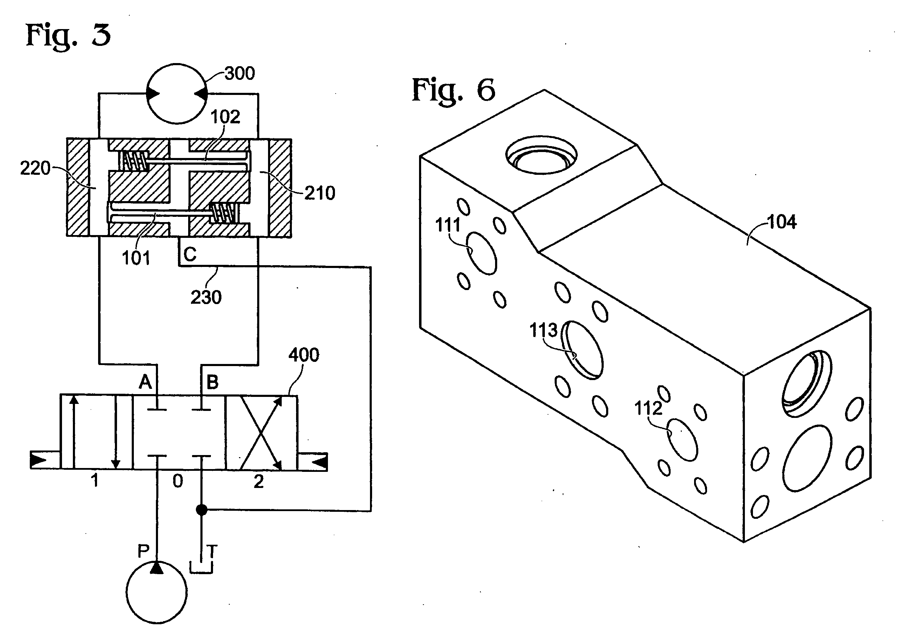

Fig. 3 zeigt in einer weiteren Darstellung die Ventile 101 und 102, die jeweils mit den Leitungen 210 und 220 sowie mit der Leitung 230 in Verbindung stehen. Es handelt sich bei den Ventilen 101 und 102 um federbelastete Sitzventile. Wird die Leitung 210 mit Druck beaufschlagt, wird der Ventilkörper des Ventils 101 nach links verschoben und dabei eine Verbindung zwischen den Leitungen 220 und 230 hergestellt, so dass Hydraulikmedium nicht nur durch die Leitung 220, sondern auch durch die Leitung 230 abfließt. Eine Verbindung zur Druckleitung 210 wird nicht hergestellt. Das Ventil 102 bleibt geschlossen. Es wird aufgrund des Druckes in der Leitung 210 in seinen Sitz gepresst und verhindert ein Einströmen des Hydraulikmediums aus der Druckleitung 210 in die Ablaufleitung 230.

Eine entsprechend umgekehrte Funktionsweise ergibt sich für das Ventil 102, wenn die Leitung 220 als Druckleitung genutzt wird. In diesem Fall wird der Ventilkörper des Ventils 102 nach rechts bewegt, während das Ventil 101 geschlossen bleibt. Die Leitungen 210, 220 sind über die Anschlüsse A, B an das Steuerventil 400 angeschlossen und werden je nach dessen Stellung mit der Hydraulikversorgung P oder mit dem Tank T verbunden.

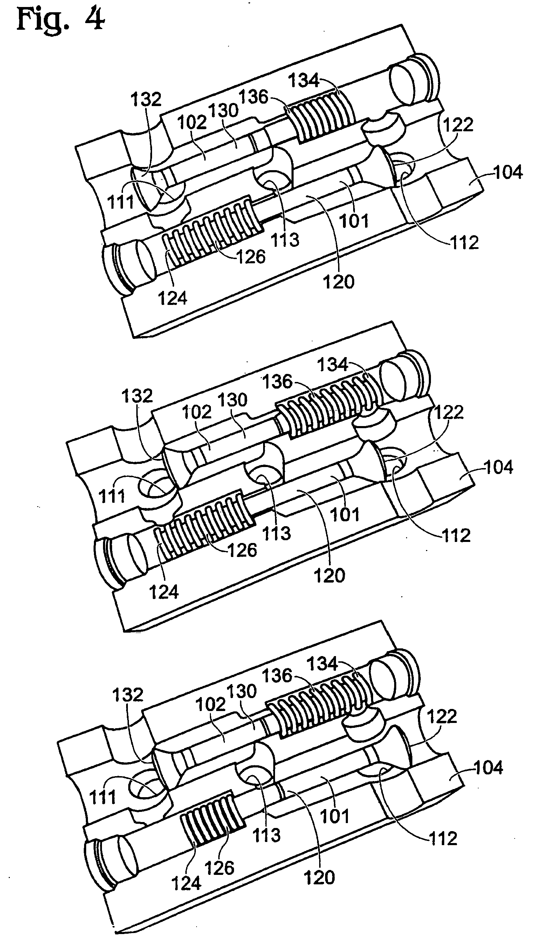

Fig. 4 zeigt perspektivische Darstellungen der Ventile 101 und 102, die in einem gemeinsamen Ventilblock 104 aufgenommen sind. In dem Ventilblock 104 befinden sich die Anschlüsse 111, 112 und 113. Wie aus Fig. 4 ersichtlich, bestehen die Ventile 101 und 102 jeweils aus einem Ventilkörper 120, 130 mit einem konisch zulaufenden Ventilteller 122, 132. Im anderen Endbereich des Ventilkörpers 120, 130 befindet sich der Teller 124, 134. Zwischen dem Teller 124, 134 und dem Ventilblock 104 befindet sich die Druckfeder 126, 136.

Die Anschlüsse 111 und 112 stehen mit den Leitungen in Verbindung oder sind Bestandteil der Leitungen, die von einem Steuerventil zu einem Verbraucher bzw. von einem Verbraucher zu einem Steuerventil führen. Diese Leitungen sind in Fig. 2 und 3 mit den Bezugszeichen 210 und 220 gekennzeichnet. Der Anschluss 113 gemäß Fig. 4 steht mit der Leitung 230 in Verbindung, die nicht über das Steuerventil führt, sondern in einen Tank mündet.

Wie aus Fig. 4 weiter ersichtlich, sind die Ventilkörper (Stößel) 120, 130 in dem Ventilblock 104 beweglich ausgeführt. Jedes der Ventile 101 und 102 ist in eine Schließposition und in eine Offenposition bewegbar. Das Ventil 101 sperrt in seiner Schließposition eine Verbindung zwischen dem Anschluss 112 und 113 und gibt diese Verbindung in seiner Offenposition frei. Die Freigabe der Verbindung zwischen den Anschlüssen 112 und 113 erfolgt dadurch, dass der Ventilstößel 120 gemäß Fig. 4 nach rechts bewegt wird, wodurch der Ventilteller 122 aus seinem Sitz bewegt wird und die Verbindung zwischen den Anschlüssen 112 und 113 freigibt. Die Bewegung des Ventilstößels 120 erfolgt gegen die Kraft der Feder 126 und wird dadurch bewirkt, dass an dem Anschluss 111 Druck anliegt. Das an dem Anschluss 111 anstehende oder durch diesen strömende unter Druck stehende Hydraulikmedium bewegt den Ventilstößel 120 nach rechts, wie dies aus Fig. 4, untere Darstellung hervorgeht. Der in den Anschluss 112 eintretende Rücklauf strömt durch eine Bohrung im Ventilblock 104 zumindest teilweise zu dem Anschluss 113 und von dort aus in den Tank, ohne ein Steuerventil zu passieren. Wird die mit dem Anschluss 111 in Verbindung stehende Leitung drucklos geschaltet, bewegt die Feder 126 den Ventilstößel 120 in seine linke Endstellung zurück, die beispielsweise aus Fig. 4, mittlere Darstellung ersichtlich ist. In diesem Fall ist die Verbindung zwischen den Anschlüssen 112 und 113 gesperrt.

Wird die mit dem Anschluss 112 in Verbindung stehende Leitung mit der Hydraulikversorgung verbunden, vollzieht sich der oben genannte Vorgang entsprechend für den oben dargestellten Ventilstößel 130 des Ventils 102. Dieser wird aufgrund der auf seinen Endbereich wirkenden Druckkraft nach links bewegt, wodurch die Verbindung zwischen den Anschlüssen 111 und 113 freigegeben wird. In dieser Schaltstellung, die sich aus Fig. 4, obere Darstellung ergibt, kann das zurückfließende Medium durch den Anschluss 111 in den Ventilblock 104 einströmen und diesen zumindest zum Teil über den Anschluss 113 verlassen.

Je nach Stellung der Ventile 101, 102 wird somit entweder der Anschluss 111 oder der Anschluss 112 mit der zum Tank führenden, an den Anschluss 113 mündenden Leitung verbunden, so dass das Hydraulikmedium mit geringem Druckverlust ablaufen kann. Die Bewegung der Ventile in ihre Offenposition erfolgt jeweils aufgrund des Druckes in den Leitungen, die mit der Hydraulikversorgung in Verbindung stehen.

Die Anschlüsse 111, 112 dienen je nachdem an welcher Leitung Druck anliegt entweder dazu, die Ventile zu betätigen, oder Zuführung des Rücklaufes zu dem Anschluss 113.

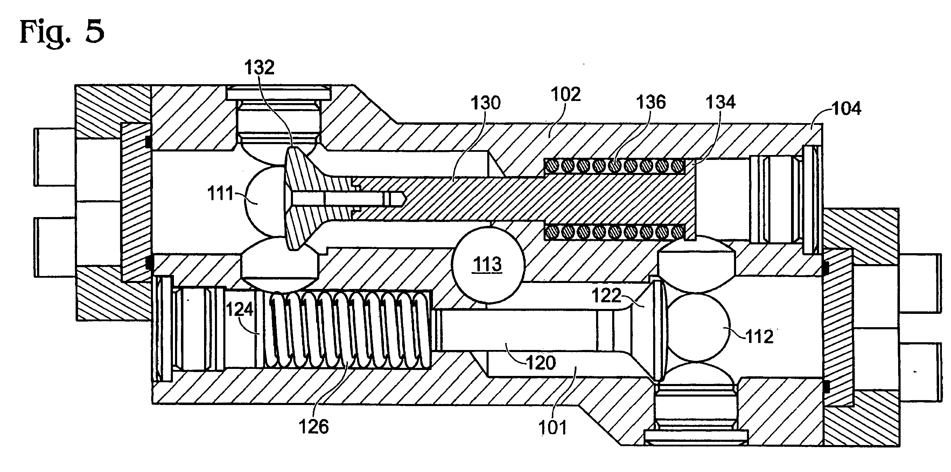

Fig. 5 zeigt eine Schnittdarstellung des Ventils gemäß Fig. 4. Aus dieser gehen die Anschlüsse 111 bis 113 hervor sowie die parallel angeordneten und in parallelen Richtungen bewegbaren Ventilstößel 120, 130. In der in Fig. 5 dargestellten Position liegt Druck an dem Anschluss 112 an, wodurch der oben dargestellte Ventilstö-βel 130 in seine linke Endposition verschoben ist. In dieser gibt der Ventilteller 132 eine Verbindung zwischen den Anschlüssen 111 und 113 frei. Gleichzeitig bewirkt die Druckbeaufschlagung des Anschlusses 112, dass das Ventil 101 in seine Schließstellung gepresst wird.

Die sich an die Anschlüsse 111 bis 113 anschließenden, im Ventilblock 104 verlaufenden Leitungsbereiche können im Ventilblock 104 enden oder auch durchgehend ausgeführt sein. Beispielsweise ist somit denkbar, dass von den Leitungen 210 und 220 gemäß Fig. 2 Leitungen abzweigen, die in dem Ventilblock 104 enden. Alternativ dazu ist auch denkbar, dass die Leitungen 210 und 220 durch den Ventilblock 104 geführt werden, wie dies in Fig. 3 angedeutet ist. Die zum Tank führende Leitung 230, die an den Anschluss 113 anmündet, kann sich einseitig oder auf beiden Seiten des Ventilblockes 104 erstrecken.

Fig. 6 zeigt eine perspektivische Ansicht des Ventilblockes 104 mit beiderseitig angeordneten Anschlüssen 111 bis 113. Die weiteren in dem Ventilblock dargestellten Öffnungen dienen im Wesentlichen zur Montage der Ventilstößel.

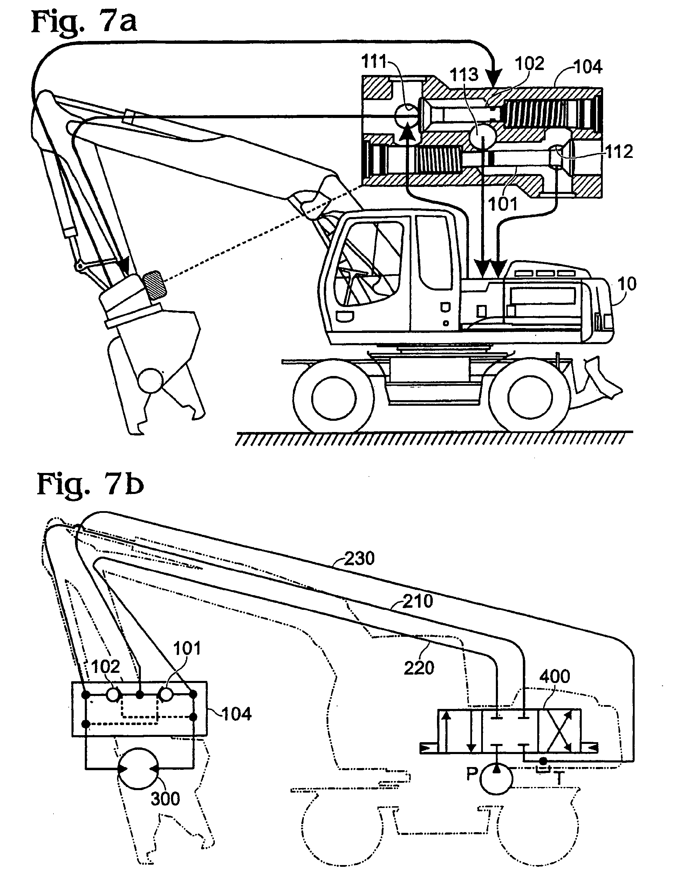

Fig. 7a und Fig. 7b zeigen eine schematische Darstellung eines Baggers mit dem Hydrauliksystem gemäß der Erfindung. Wie aus den Figuren ersichtlich, durchströmt das unter Druck stehende Hydraulikmedium nach Passieren des nur in Fig. 7b dargestellten Steuerventils 400 in den Ventilblock 104, was dazu führt, dass das in Fig. 7a unten dargestellte Ventil 101 in seine Offenposition bewegt wird. Das unter Druck stehende Hydraulikmedium durchströmt den Ventilblock 104 und wird schließlich zum Werkzeug geführt.

Der Rücklauf tritt über den Anschluss 112 gemäß Fig. 4 in den Ventilblock 104 ein. Aufgrund des geöffneten Ventils 101 verlässt der Rücklauf den Ventilblock 104 nicht nur über die mit dem Anschluss 112 fluchtende Ausströmöffnung, sondern auch über den Anschluss 113 unmittelbar zum Tank.

Eine entsprechende Funktionalität ergibt sich für die Darstellung in Fig. 7b. Wird die Leitung 220 mit Druck beaufschlagt, wird das Ventil 102 geöffnet und eine Verbindung zwischen der Rücklaufleitung 210 und der zum Tank T führenden Leitung 230 hergestellt. Das Ventil 101 bleibt geschlossen.

Wird aufgrund einer entsprechenden Umschaltung des Steuerventils 400 die Leitung 210 mit Druck beaufschlagt, wird das Ventil 101 geöffnet und eine Verbindung zwischen Rücklaufleitung 220 und Leitung 230 hergestellt. Das Ventil 102 bleibt geschlossen.

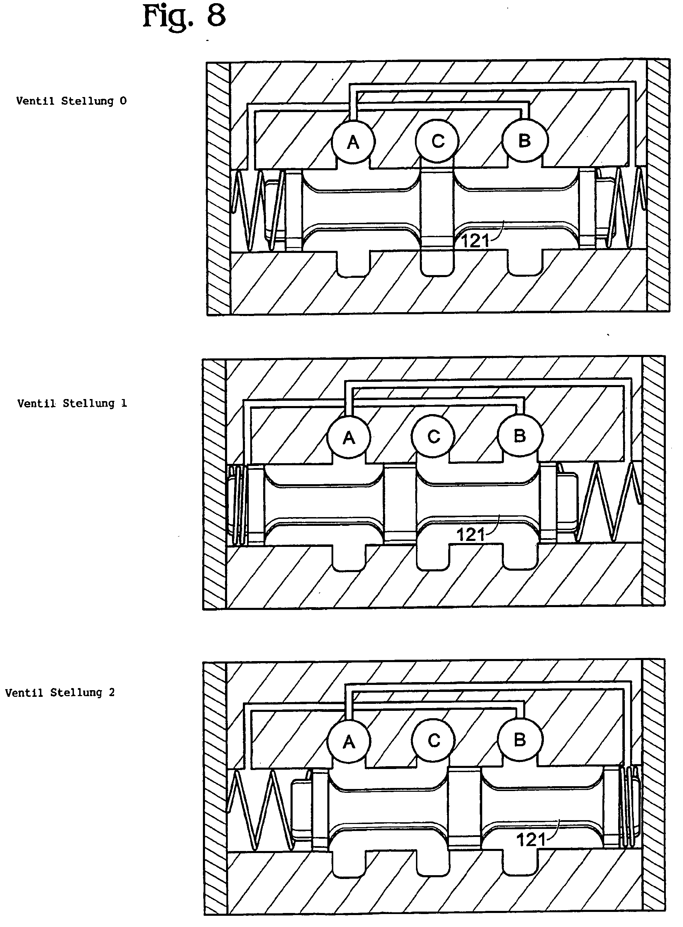

Fig. 8 zeigt das Ventil als Schieberventil mit dem Schieber 121. Es kann z. B. mit einem Steuerventil gemäß Fig. 3 verwendet werden. In der oben gezeigten Ventilstellung 0 ist der mit dem Tank T in Verbindung stehende Anschluss C gesperrt, sodass weder zwischen den Anschlüssen A und C noch zwischen den Anschlüssen B und C eine Verbindung besteht. Wird der Anschluss A mit der Hydraulikquelle verbunden, wird gemäß Fig. 8 mittlere Darstellung, der Schieber 121 entgegen der Kraft der links angeordneten Feder nach links verschoben wird und eine Verbindung zwischen Anschluss B (Rücklauf zum Steuerventil) und Anschluss C (Rücklauf zum Tank) freigegeben wird.

Dient stattdessen Anschluss B als druckführender Anschluss, wird der Schieber 121 gegen die Kraft der rechts angeordneten Feder nach rechts verschoben (Fig. 8 untere Darstellung) und eine Verbindung zwischen dem Anschluss A (Rücklauf zum Steuerventil) und Anschluss C (Rücklauf zum Tank) freigegeben.

Vorteilhaft ist das Ventil direkt gesteuert und nicht durch eine Vorsteuerung, wie sie aus dem Stand der Technik bekannt ist. Durch direkte Ansteuerung ist beim Sitzventil der Steuerdruck veränderbar.

Weiterhin kann vorgesehen sein, dass das Ventil bzw. die Ventile in dem z. B. in Fig. 7b dargestellten Block des Steuerventils 400 integriert ist. Grundsätzlich kann das Ventil / die Ventile an beliebiger Position zwischen Verbraucher- und Steuerventil angeordnet sein.

Der Ventilblock des Ventils kann im Bereich des Werkzeuges angeordnet werden. Sehr vorteilhaft ist es, wenn das Ventil im Anbaugerät integriert ist, wie dies in Fig. 7a und 7b dargestellt ist. Auf diese Weise kann möglichst nah am Werkzeug eine Ableitung des Rücklaufes zur Verfügung gestellt werden. Der Rücklauf muss zwar noch durch Leitungen zum Tank zurückgeführt werden, vorzugsweise sonst aber keine Hindernisse umströmen, die zu Leistungsverlusten führen würden. An Stelle der Anordnung am Werkzeug ist auch ein Anbringen beispielsweise im Bereich des Fahrwerkes möglich, da auch hier entsprechende Verluste auftreten. Insbesondere bei Abbruchwerkzeugen ergibt sich das eingangs genannte Problem des hohen Ölrücklaufes.

Durch eine Anordnung des Ventils am Anbaugerät wird der weitere Vorteil erreicht, dass das Ventil zusammen mit dem Anbaugerät ablegbar ist, sodass ein beliebiger Bagger (bzw. sonstiges Arbeitsgerät) eingesetzt werden kann, der dann beispielsweise mit Schnellkupplung das Anbaugerät mit dem Ventil übernehmen kann.

Das Ventil kann somit zusammen mit dem Arbeitswerkzeug wechselbar sein und somit nur dann zugerüstet werden, wenn es tatsächlich benötigt wird.

Grundsätzlich ist die Anordnung des Ventils beliebig. Es kann auch in das Steuerventil integriert sein. Auch eine Integration in dem Ventilblock einer Schnellkupplung ist denkbar.

Die in den Zeichnungen dargestellte Ventilanordnung betrifft Hin- und Rücklauf, wie er üblicherweise notwendig ist. Ist eine nur einseitige Wirkung angestrebt, kann das dargestellte Ventil auch halbseitig ausgeführt werden.

Die Erfindung ist beispielsweise in Verbindung mit Werkzeugen an Baggern einsetzbar. Bei Anwendung eines Hammers sind nicht nur zwei Leitungen für Vor- und Rücklauf vorhanden, sondern noch eine zusätzliche Leitung, die unmittelbar in den Tank zurückführt. Bei Anwendung der Erfindung für ein derartiges System kann diese Leistung stets eingesetzt werden, da ein entsprechender Teilvolumenstrom unmittelbar in den Tank zurückgeführt wird. Dadurch ergibt sich der Vorteil, dass stets eine Leitung in den Tank führt und die andere Leitung nicht weggeschaltet wird, wie dies im Stand der Technik häufig der Fall ist. Ein besonders vorteilhafter Anwendungsfall ergibt sich somit daraus, dass bei Arbeitsgeräten mit ohnehin drei vorhandenen Leitungen diese genutzt werden können, wobei eine Leitung als Rücklaufleitung in dem Tank dient.

Das Ventil des erfindungsgemäßen Hydrauliksystems ist vorzugsweise als Sitzventil und strömungsgünstig ausgeführt, sodass sich möglichst geringe Druckverluste ergeben.

## Patentansprüche

1. Hydrauliksystem mit einer Hydraulikversorgung, einem Tank, einem Verbraucher (300) sowie mit einem zwischen Hydraulikversorgung und Verbraucher (300) angeordneten Steuerventil (400), das mittels einer ersten Leitung (210) sowie einer zweiten Leitung (220) mit dem Verbraucher (300) in Verbindung steht, wobei das Steuerventil (400) in unterschiedliche Positionen schaltbar ist, wobei ein erstes Ventil (101) vorgesehen ist, das mit der ersten (210) und der zweiten Leitung (220) in Verbindung steht, wobei eine dritte Leitung (230) vorgesehen ist, die mit dem ersten Ventil (101) in Verbindung steht und die nicht in dem Steuerventil (400) mündet, sondern direkt in dem Tank mündet, wobei das erste Ventil (101) derart verschaltet ist, dass es bei Druckbeaufschlagung der ersten Leitung (210) eine Verbindung zwischen zweiter Leitung (220) und dritter Leitung (230) freigibt und wobei ferner ein zweites Ventil (102) vorgesehen ist, das ebenfalls mit der ersten, zweiten und dritten Leitung (230) in Verbindung steht und derart verschaltet ist, dass es bei Druckbeaufschlagung der zweiten Leitung (220) eine Verbindung zwischen erster Leitung (210) und dritter Leitung (230) freigibt, **dadurch gekennzeichnet, dass** das Steuerventil (400) in wenigstens einer Position die Hydraulikversorgung mit der ersten Leitung (210) und den Tank mit der zweiten Leitung (220) verbindet, und dass das Steuerventil (400) in wenigstens einer weiteren Position die Hydraulikversorgung mit der zweiten Leitung (220) und den Tank mit der ersten Leitung (210) verbindet.

2. Hydrauliksystem nach Anspruch 1, **dadurch gekennzeichnet, dass** das erste (101) und das zweite Ventil (102) in einem gemeinsamen Ventilblock (104) angeordnet sind.

3. Hydrauliksystem nach Anspruch 1 oder 2, **dadurch gekennzeichnet, dass** das erste (101) und/oder das zweite Ventil (102) als federbelastete Sitzventile oder als Schieberventile ausgeführt sind.

4. Hydrauliksystem nach einem der vorhergehenden Ansprüche, **dadurch gekennzeichnet, dass** das erste (101) und/oder das zweite Ventil (102) derart ausgeführt ist, dass das Ventil einen ersten (111), zweiten (112) und dritten Anschluss (113) sowie einen ersten Ventilkörper (120, 121) aufweist, der in unterschiedliche Positionen bewegbar ist und in einer Schließstellung eine Verbindung zwischen dem zweiten (112) und dritten Anschluss (113) absperrt und in einer Offenstellung eine Verbindung zwischen dem zweiten (112) und dritten Anschluss (113) freigibt, wobei der Ventilkörper (120, 121) mit dem ersten Anschluss (111) in Verbindung steht und derart angeordnet ist, dass der Ventilkörper (120, 121) bei Druckbeaufschlagung des ersten Anschlusses (111) in die Offenstellung bewegt wird.

5. Hydrauliksystem nach Anspruch 4, **dadurch gekennzeichnet, dass** ein zweiter Ventilkörper (130, 121) vorgesehen ist, der in unterschiedliche Positionen bewegbar ist und in einer Schließstellung eine Verbindung zwischen dem ersten (111) und dritten Anschluss (113) absperrt und in einer Offenstellung eine Verbindung zwischen dem ersten (111) und dritten Anschluss (113) freigibt, wobei der Ventilkörper (130, 121) mit dem zweiten Anschluss (112) in Verbindung steht und derart angeordnet ist, dass der Ventilkörper (130, 121) bei Druckbeaufschlagung des zweiten Anschlusses (112) in die Offenstellung bewegt wird.

6. Hydrauliksystem nach Anspruch 4 oder 5, **dadurch gekennzeichnet, dass** der erste (120, 121) und/oder der zweite Ventilkörper (130, 121) ein längsverschieblich in einem Ventilblock (104) des Ventils aufgenommener federbelasteter Stößel oder Schieber (121) ist.

7. Hydrauliksystem nach Anspruch 6, **dadurch gekennzeichnet, dass** der Stößel in seinem einen Endbereich über einen konisch zulaufenden Ventilteller (122, 132) verfügt, der in der Schließstellung an einem Ventilsitz des Ventilblockes (104) anliegt.

8. Hydrauliksystem nach Anspruch 6 oder 7, **dadurch gekennzeichnet, dass** der Stößel in einem Endbereich einen Teller (124, 134) aufweist und dass eine Druckfeder (126, 136) vorgesehen ist, die sich zwischen dem Teller (124, 134) und dem Ventilblock abstützt.

9. Hydrauliksystem nach einem der Ansprüche 6 bis 8, **dadurch gekennzeichnet, dass** die Stößel in zueinander parallel verlaufenden Richtungen bewegbar sind.

10. Hydrauliksystem nach einem der vorhergehenden Ansprüche, **dadurch gekennzeichnet, dass** der Verbraucher (300) eine mit dem Werkzeug eines Arbeitsgerätes, insbesondere eines Baggers (10), in Verbindung stehende Kolben-Zylinder-Einheit ist.

11. Arbeitsgerät, insbesondere Bagger (10) mit einem Hydrauliksystem nach einem der Ansprüche 1 bis 10.

12. Arbeitsgerät nach Anspruch 11, **dadurch gekennzeichnet, dass** es sich bei dem Verbraucher (300) um eine mit einer Schere, einem Hammer, einer Zange, einem Löffel und dergleichen des Arbeitsgerätes in Verbindung stehende Kolben-Zylinder-Einheit oder sonstige Antriebseinheit handelt.

13. Arbeitsgerät nach Anspruch 11 oder 12, **dadurch gekennzeichnet, dass** das Ventil am Verbraucher (300) oder in dessen unmittelbarer Nähe angeordnet ist.

## Claims

1. A hydraulic system with a hydraulic supply, a tank, a consumer (300) and with a control valve (400), which is arranged between hydraulic supply and consumer (300) and is in communication with the consumer (300) by means of a first line (210) and a second line (220), it being possible for the control valve (400) to be switched into different positions, wherein a first valve (101) is provided, which is in communication with the first line (210) and the second line (220), wherein a third line (230) is provided, which is in communication with the first valve (101) and does not open out in the control valve (400), but directly in the tank, wherein the first valve (101) is connected in such a manner that when pressure is applied to the first line (210) it opens up a connection between second line (220) and third line (230), and wherein furthermore a second valve (102) is provided, which is likewise in communication with the first line, the second line and the third line (230) and is connected in such a manner that when pressure is applied to the second line (220) it opens up a connection between first line (210) and third line (230), **characterized in that** the control valve (400), in at least one position, connects the hydraulic supply to the first line (210) and the tank to the second line (220), and that the control valve (400), in at least one further position, connects the hydraulic supply to the second line (220) and the tank to the first line (210).

2. The hydraulic system according to claim 1, **characterized in that** the first valve (101) and the second valve (102) are arranged in a common valve block (104).

3. The hydraulic system according to claim 1 or 2, **characterized in that** the first valve (101) and/or the second valve (102) are designed as spring-loaded seat valves or as slide valves.

4. The hydraulic system according to any of the preceding claims, **characterized in that** the first valve (101) and/or the second valve (102) is designed such that the valve includes a first port (111), a second port (112) and a third port (113) as well as a first valve body (120, 121), which can be moved into different positions and in a closed position blocks off a connection between the second port (112) and third port (113) and in an open position opens up a connection between the second port (112) and third port (113), the valve body (120, 121) being in communication with the first port (111) and being arranged in such a manner that the valve body (120, 121) is moved into the open position when pressure is applied to the first port (111).

5. The hydraulic system according to claim 4, **characterized in that** a second valve body (130, 121) is provided, which can be moved into different positions and in a closed position blocks off a connection between the first port (111) and third port (113) and in an open position opens up a connection between the first port (111) and third port (113), the valve body (130, 121) being in communication with the second port (112) and being arranged in such a manner that the valve body (130, 121) is moved into the open position when pressure is applied to the second port (112).

6. The hydraulic system according to claim 4 or 5, **characterized in that** the first valve body (120, 121) and/or the second valve body (130, 121) is a springloaded lifter or slide (121) which is accommodated longitudinally displaceably in a valve block (104) of the valve.

7. The hydraulic system according to claim 6, **characterized in that** the lifter, in its one end region, has a conically narrowing valve disk (122, 132) which in the closed position bears against a valve seat of the valve block (104).

8. The hydraulic system according to claim 6 or 7, **characterized in that** the lifter, in an end region, has a disk (124, 134), and that a compression spring (126, 136) is provided, which is supported between the disk (124, 134) and the valve block.

9. The hydraulic system according to any of claims 6 to 8, **characterized in that** the lifters are movable in directions extending parallel to each other.

10. The hydraulic system according to any of the preceding claims, **characterized in that** the consumer (300) is a piston-cylinder unit which is in communication with the tool of a working appliance, in particular of an excavator (10).

11. A working appliance, in particular an excavator (10), having a hydraulic system according to any of claims 1 to 10.

12. The working appliance according to claim 11, **characterized in that** the consumer (300) is a piston-cylinder unit or other drive unit which is in communication with a shears mechanism, a hammer, tongs, a scoop and the like of the working appliance.

13. The working appliance according to claim 11 or 12, **characterized in that** the valve is arranged at the consumer (300) or in the immediate vicinity thereof.

## Revendications

1. Système hydraulique comportant une alimentation hydraulique, un réservoir, un consommateur. (300), ainsi qu'une soupape de commande (400), qui est disposée entre l'alimentation hydraulique et le consommateur (300) et qui est reliée au consommateur (300) via une première conduite (210), ainsi qu'une deuxième conduite (220), ladite soupape de commande (400) pouvant être commandée dans différentes positions, une première soupape (101) étant prévue, laquelle est reliée à la première (210) et à la deuxième conduite (220), une troisième conduite (230) étant prévue, laquelle est reliée à la première soupape (101) et ne débouche pas dans la soupape de commande (400), mais débouche directement dans le réservoir, la première soupape (101) étant commandée de telle sorte que, sous l'effet d'une sollicitation en pression de la première conduite (210), elle ouvre une liaison entre la deuxième conduite (220) et la troisième conduite (230), et une deuxième soupape (102) étant également prévue, laquelle est également reliée à la première, deuxième et troisième conduite (230) et est commandée de telle sorte que, sous l'effet d'une sollicitation en pression de la deuxième conduite (220), elle ouvre une liaison entre la première conduite (210) et la troisième conduite (230), **caractérisé en ce que** la soupape de commande (400), dans au moins une position, relie l'alimentation hydraulique à la première conduite (210) et le réservoir à la deuxième conduite (220), et **en ce que** la soupape de commande (400), dans au moins une autre position, relie l'alimentation hydraulique à la deuxième conduite (220) et le réservoir à la première conduite (210).

2. Système hydraulique selon la revendication 1, **caractérisé en ce que** la première (101) et la deuxième soupape (102) sont disposées dans un bloc de distribution et régulation (104) commun.

3. Système hydraulique selon la revendication 1 ou 2, **caractérisé en ce que** la première (101) et/ou la deuxième soupape (102) sont réalisées sous la forme de soupapes à siège sollicitées par ressort ou sous forme de soupapes à coulisse.

4. Système hydraulique selon l'une quelconque des revendications précédentes, **caractérisé en ce que** la première (101) et/ou la deuxième soupape (102) sont réalisées de telle sorte que ladite soupape comporte un premier (111), un deuxième (112) et un troisième point de raccordement (113), ainsi qu'un premier corps de soupape (120, 121), qui peut être amené dans différentes positions et qui, dans une position de fermeture, ferme une liaison entre le deuxième (112) et le troisième point de raccordement (113) et qui, dans une position d'ouverture, ouvre une liaison entre le deuxième (112) et le troisième point de raccordement (113), ledit corps de soupape (120, 121) étant relié au premier point de raccordement (111) et étant disposé de telle sorte que, en présence d'une sollicitation de pression sur le premier point de raccordement (111), le corps de soupape (120, 121) est amené dans la position d'ouverture.

5. Système hydraulique selon la revendication 4, **caractérisé en ce qu'**il est prévu un deuxième corps de soupape (130, 121) qui peut être amené dans différentes positions et qui, dans une position de fermeture, ferme une liaison entre le premier (111) et le troisième point de raccordement (113) et, dans une position d'ouverture, ouvre une liaison entre le premier (111) et le troisième point de raccordement (113), ledit corps de soupape (130, 121) étant relié au deuxième point de raccordement (112) et étant disposé de telle sorte que, en présence d'une sollicitation de pression sur le deuxième point de raccordement (112), ledit corps de soupape (130, 121) est amené dans la position d'ouverture.

6. Système hydraulique selon la revendication 4 ou 5, **caractérisé en ce que** le premier (120, 121) et/ou le deuxième corps de soupape (130, 121) est un poussoir ou une coulisse (121) sollicités par ressort et logés dans un bloc de distribution et régulation (104) de la soupape de manière mobile dans le sens longitudinal.

7. Système hydraulique selon la revendication 6, **caractérisé en ce que** le poussoir est muni, à l'une de ses extrémités, d'une tête de soupape (122, 132) conique qui, dans la position de fermeture, est en appui contre un siège de soupape du bloc de distribution et régulation (104).

8. Système hydraulique selon la revendication 6 ou 7, **caractérisé en ce que** le poussoir, dans une zone d'extrémité, comporte un siège plan (124, 134) et **en ce qu'**il est prévu un ressort de pression (126, 136) qui est supporté entre le siège plan (124, 134) et le bloc de distribution et régulation.

9. Système hydraulique selon l'une quelconque des revendications 6 à 8, **caractérisé en ce que** le poussoir peut être déplacé dans des directions parallèles entre elles.

10. Système hydraulique selon l'une quelconque des revendications précédentes, **caractérisé en ce que** le consommateur (300) est un vérin relié à l'outil d'un engin de travail, en particulier une pelle mécanique (10).

11. Engin de travail, en particulier pelle mécanique (10), comportant un système hydraulique selon l'une quelconque des revendications 1 à 10.

12. Engin de travail selon la revendication 11, **caractérisé en ce que** le consommateur (300) est un vérin ou toute autre unité d'entraînement, relié à une cisaille, un marteau, un grappin, un godet et tout élément similaire de l'engin de travail.

13. Engin de travail selon la revendication 11 ou 12, **caractérisé en ce que** la soupape est agencée sur le consommateur (300) ou à proximité immédiate de celui-ci.
